# EUROPÄISCHE PATENTSCHRIFT

(11) **EP 3 084 379 B1**
(45) Veröffentlichungstag und Bekanntmachung des Hinweises auf die Patenterteilung: **29.11.2017**
(21) Anmeldenummer: 14827704.9
(22) Anmeldetag: 15.12.2014
(51) Int. Cl.: G01L 1/16, G01L 5/00, F16B 31/02, B30B 15/00

(54) **KRAFTSENSOR FÜR HANDBETRIEBENE ODER PNEUMATISCHE PRESSEN**
FORCE SENSOR FOR MANUALLY OPERATED OR PNEUMATIC PRESSES
CAPTEUR DE FORCE POUR PRESSES MANUELLES OU PNEUMATIQUES

(30) Priorität: 20.12.2013 CH 21172013
(43) Veröffentlichungstag der Anmeldung: 26.10.2016
(73) Patentinhaber: Kistler Holding AG, 8408 Winterthur (CH)
(72) Erfinder: LEHMANN, Andri, CH-8412 Aesch b. Neftenbach (CH)
(86) Internationale Anmeldenummer: PCT/CH2014/000174
(87) Internationale Veröffentlichungsnummer: WO 2015/089680

(56) Entgegenhaltungen:
- EP-A1- 0 140 066
- EP-A1- 1 590 641
- WO-A1-2011/030839

## Beschreibung

### Technisches Gebiet

Die Erfindung betrifft einen Kraftsensor mit einer unteren und einer oberen ringförmigen Auflagefläche und einem Aussendurchmesser D_{A} zum Messen von axial auftretenden Kräften in handbetriebenen oder pneumatischen Pressen umfassend einen zwischen einem Bolzen und einer Mutter vorgespannten, piezoelektrischen Kraftmessring mit einem Steckeranschluss, wobei die Mutter eine erste Bohrung mit einem ersten Durchmesser mit einem Innengewinde aufweist, und wobei der Bolzen ein Kopfteil aufweist sowie eine Hohldehnschraube mit einem Innendurchmesser D_{I} und mit einem frontseitigen Aussengewinde, welche den Kraftmessring durchsetzt und in das Innengewinde der Mutter eingreift.

### Stand der Technik

Kraftsensoren oben genannter Art werden für vielerlei Zwecke eingesetzt und beispielsweise unter der Bezeichnung Press Force Sensor vertrieben.

Beispiele solcher Kraftsensoren sind in der EP 1590641 beschrieben. Die dort als Stand der Technik angegebenen Messsensoren bestehen aus einem handelsüblichen Kraftsensor, der zwischen einem Bolzen und einer Mutter eingespannt ist, wobei sowohl der Bolzen und die Mutter an deren Aussenseiten zentrale Gewindebohrungen aufweisen zum Anbringen von Werkstücken. Diese Ausführung benötigt sehr viel Bauhöhe.

Als bezüglich der Bauhöhe verbesserte Ausführung wird im selben Dokument eine Vorrichtung beschrieben, bei der der Sensor direkt im Bolzen integriert ausgestaltet ist. Zur Befestigung an angrenzende Werkstücke ist entweder eine durchgehende zentrale Bohrung vorgesehen, mehrere kleinere Gewindebohrungen an den frontseitigen Aussenflächen von Bolzen und Mutter oder eine zentrale Bohrung mit einem Absatz als innere Auflagefläche für einen Schraubenkopf einer durch die Bohrung geführte Befestigungsschraube. Die Ausführung mit integriertem Sensor beansprucht zwar eine geringere Bauhöhe, ist aber insgesamt teurer als die Ausführung mit separatem Sensor, weil kein herkömmlicher Sensor benutzt werden kann.

Solche Kraftsensoren werden beispielsweise verwendet, um die aufgebrachten Kräfte von handbetriebenen oder pneumatischen Pressen messen zu können. Da der Hub solcher Pressen systembedingt nicht sehr hoch ist, sollten die darin eingesetzten Kraftsensoren beispielsweise nicht höher als 50 mm sein bei Handpressen bis 60 kN. Zudem ist es wichtig, dass die Aufnahmevorrichtungen an beiden äusseren Stirnseiten des Kraftsensors einfach an die Vorgaben der Pressenhersteller angepasst werden können.

### Darstellung der Erfindung

Aufgabe der vorliegenden Erfindung ist es, einen Kraftsensor mit einer zentralen Achse eingangs angegebener Art zum Messen von axial auftretenden Kräften in handbetriebenen oder pneumatischen Pressen bis 60 kN zu beschreiben, der eine geringere Bauhöhe aufweist, insgesamt aber in der Herstellung günstiger kommt. Zudem sollen auch Zugkräfte bis 10kN gemessen werden können, vorzugsweise sogar bis 18 kN.

Die Aufgabe wird gelöst durch einen erfindungsgemässen Kraftsensor mit den Merkmalen des ersten Patentanspruchs. Eine Alternative ist im unabhängigen Patentanspruch 4 beschrieben. Weitere vorteilhafte Ausführungen sind in den Unteransprüchen beschrieben.

Erfindungsgemäss weist die Mutter eine zweite Bohrung mit einem zweiten, kleineren Durchmesser als der Innendurchmesser D_{I} der Hohldehnschraube auf, welche die Mutter durchsetzt, wobei der Durchmesser der zweiten Bohrung mindestens ein Viertel des Aussendurchmessers ausmacht. Zudem ist die Länge der zweiten Bohrung mindestens so lang wie ihr Durchmesser. Erfindungsgemäss ist zudem die Innenfläche der zweiten Bohrung als Zentrieraufnahme für eine Gleitpassung ausgestaltet.

In einer alternativen Ausführung sind die Anordnung von Bolzen und Mutter vertauscht, wobei die zweite Bohrung mit allen beschriebenen Merkmalen dann im Kopfteil des Bolzen ausgestaltet ist.

Erfindungsgemäss weist die Mutter resp. das Kopfteil im mittleren Bereich der zweiten Bohrung eine radiale Bohrung von aussen bis zur Innenwand mit einem Innengewinde auf, in der eine Madenschraube eingesetzt ist. Durch Anziehen der Madenschraube kann ein Aufnahmebolzen fixiert werden.

Der Aussendurchmessers D_{A} des Kraftsensors ist im Wesentlichen gleich dem Aussendurchmesser der Mutter, der wiederum im Wesentlichen gleich gross ist wie der Aussendurchmesser des Kraftmessrings und des Bolzen.

Eine derartige Vorrichtung ist günstig in der Herstellung, weil ein herkömmlicher Kraftmessring verwendet werden kann. Als Beispiel wird ein Sensor des Typs 9040A der Firma Kistler Instrumente AG vorgeschlagen.

Die Bauhöhe wird dadurch reduziert, indem in der Mutter resp. im Kopfteil des Bolzen eine Vorrichtung zum Anbringung eines Einspannwerkzeuges ausgestaltet ist in Form einer Zentrieraufnahme für eine Gleitpassung. Diese ist beispielsweise bei einem Durchmesser von 14 mm mit einer Toleranz von H7 0/+0.018 angefertigt, damit eine Gleitpassung H7/g6 mit Kleinstspiel gewährleistet ist. Ein Werkzeug, das mit einem entsprechenden Aufnahmebolzen versehen ist, kann somit in der gewünschten Zentrieraufnahme angeordnet werden und mit seinem Aufnahmebolzen zentriert in den Kraftsensor eingefügt werden. Die Befestigung kann mittels einer von aussen zugänglichen Madenschraube erreicht werden. So ist das Montieren und Demontieren des Werkzeugs sehr einfach. Die Montage gewährleistet zudem stets eine zentrierte und kippsichere Aufnahme des Werkzeugs.

Erfindungsgemäss kann der Aufnahmebolzen lang ausgestaltet sein und weit in den Bolzen hineinreichen, da die Hohldehnschraube einen grösseren Innendurchmesser aufweist als die zweite Bohrung. Insbesondere kann der Aufnahmebolzen auch den Kraftsensor vollständig durchstossen und je nach Bedarf die Kraftmessung überbrücken, ohne dass dafür der Kraftsensor entfernt werden muss. Es wird dann nur eine Wegmessung durchgeführt.

### Kurze Beschreibung der Zeichnungen

Im Folgenden wird die Erfindung unter Beizug der Zeichnungen näher erklärt. Es zeigen
- Fig. 1: eine schematische Darstellung eines erfindungsgemässen Kraftsensors im Querschnitt;
- Fig. 2: eine schematische Darstellung des erfindungsgemässen Kraftsensors mit daran angebrachte Aufnahmebolzen und Einspannbolzen;
- Fig. 3: eine alternative Ausführungsform des erfindungsgemässen Kraftsensors in schematischer Darstellung mit daran angebrachte Aufnahmebolzen und Einspannbolzen.
- Fig. 4: eine schematische Darstellung einer Handpresse mit einem erfindungsgemässen Kraftsensor;

### Wege zur Ausführung der Erfindung

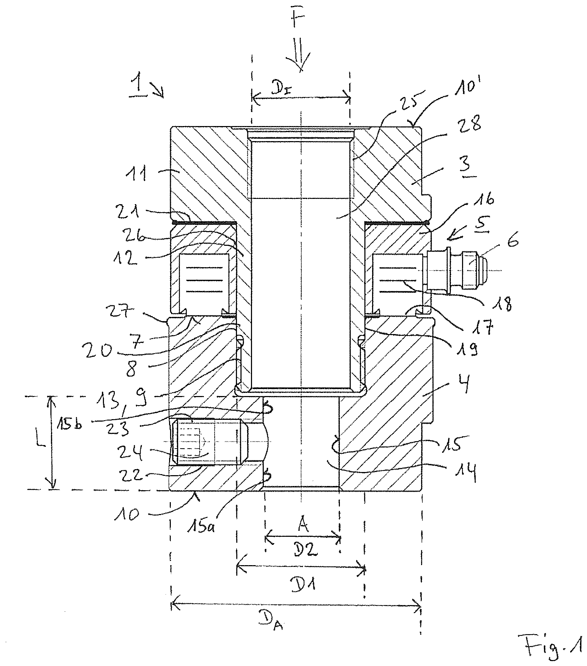

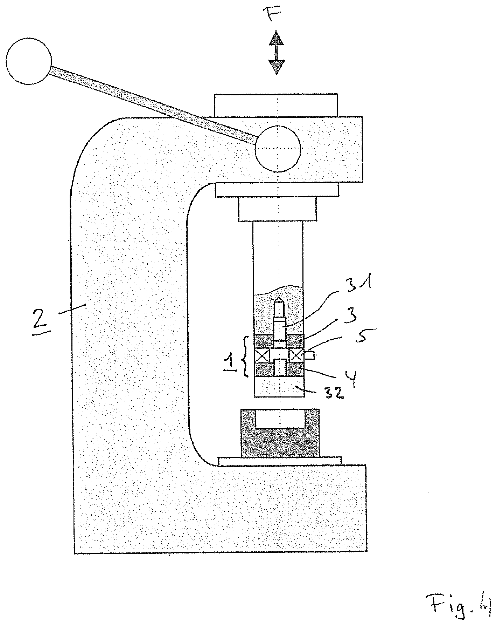

Fig. 1 zeigt einen Kraftsensor 1 mit einem Aussendurchmesser D_{A} und mit einer zentralen Achse A zum Messen von axial auftretenden Kräften F in handbetriebenen oder pneumatischen Pressen 2 gemäss Fig. 4, mit je einer unteren und einer oberen, ringförmigen Auflagefläche 10, 10'. Er umfasst einen zwischen einem Bolzen 3 und einer Mutter 4 vorgespannten, piezoelektrischen Kraftmessring 5 mit einem Steckeranschluss 6. Der Aussendurchmesser D_{A} ist im Bereich der Mutter 4 im Wesentlichen gleich gross wie im Bereich des Bolzen 3 und des Kraftmessrings 5.

Die Mutter 4 weist eine innere Stirnfläche 7 auf mit einer ersten Bohrung 8 mit einem ersten Durchmesser D1 mit einem Innengewinde 9. Zudem weist sie gemäss einer ersten Ausführung die untere, ringförmige Auflagefläche 10 auf. Der Bolzen 3 weist ein Kopfteil 11 auf sowie eine Hohldehnschraube 12 mit einem Innendurchmesser D_{I} in einer zentralen Bohrung 28. Die Hohldehnschraube 12 weist zudem ein frontseitiges Aussengewinde 13 auf, welche den Kraftmessring 5 durchsetzt und in das Innengewinde 9 der Mutter 4 eingreift. Erfindungsgemäss weist in der ersten erfindungsgemässen Ausgestaltung die Mutter 4 eine zweite Bohrung 14 auf mit einem zweiten, kleineren Durchmesser D2 als der Innendurchmesser D_{I} der Hohldehnschraube 12, welche die Mutter 4 durchsetzt, wobei der Durchmesser D2 der zweiten Bohrung mindestens einem Viertel des genannten Aussendurchmessers D_{A} ausmacht und die Länge L der zweiten Bohrung 14 mindestens so lang ist wie ihr Durchmesser D2. Zudem ist die Innenwand 15 der zweiten Bohrung als Zentrieraufnahme 15 mit der Qualität H7 für eine Gleitpassung H7/g6 ausgestaltet.

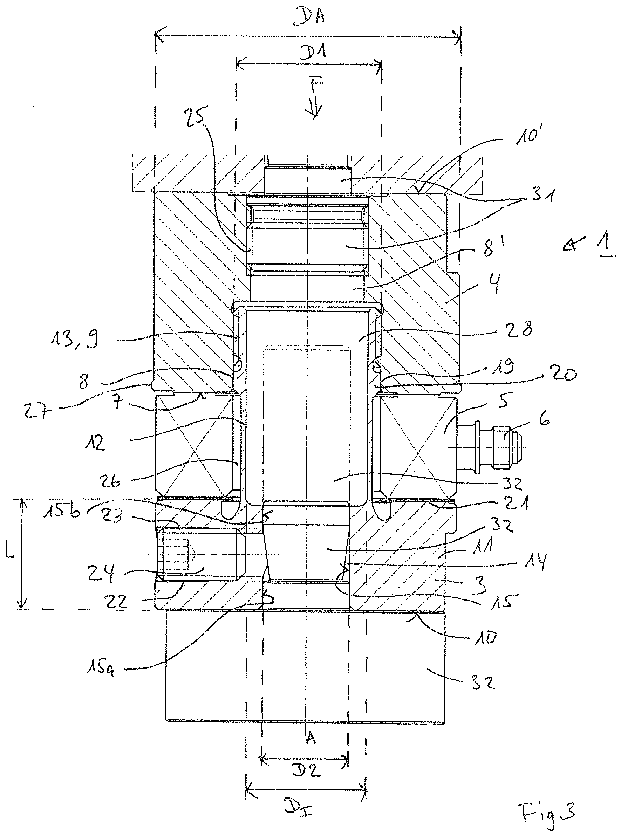

Eine alternative, erfindungsgemässe Ausgestaltung ist in Fig. 3 dargestellt. Im Gegensatz zur ersten erfindungsgemässen Variante sind die Ausrichtung von Mutter 4 und Bolzen 3 vertauscht: Das Kopfteil 11 des Bolzen 3 weist nun die untere, ringförmige Auflagefläche 10 und auch die zweite Bohrung 14 auf, mit allen genannten Merkmalen, insbesondere mit der Zentrieraufnahme an der Innenwand 15 für eine Gleitpassung und alle genannten Masse und deren Verhältnisse.

Der piezoelektrische Kraftmessring 5 ist ein handelsüblicher Sensor nach dem Stand der Technik. Er umfasst ein Gehäuse 16 mit darin unter einer Membran 17 eingelagerte und vorgespannte piezoelektrische Messelemente 18 sowie einen Steckeranschluss 6.

In einer bevorzugten Ausführung weist die Mutter 4 in der ersten Bohrung 8 nahe der Stirnfläche 7 ebenfalls eine Innenfläche 19 auf, die als Zentrieraufnahme 19 der Qualität H7 für eine Gleitpassung H7/g6 ausgestaltet ist. Zudem weist der Bolzen 3 anschliessend an das Aussengewinde 13, dem Kopfteil 11 zugewandt, einen Führungsbereich 20 auf, der mindestens so breit ist wie das Gewinde 13 und nahe der inneren Stirnfläche 7 in die die Zentrieraufnahme 19 der ersten Bohrung 8 zentriert aufgenommen ist, wie aus Fig. 1 ersichtlich ist. Dadurch wird die Zentrierung zwischen dem Bolzen 3 und der Mutter 4 gewährleistet. Es hat sich gezeigt, dass eine Zentrierung, die allein durch die Gewindeverbindung zwischen Bolzen 3 und Mutter 4 zustande kommt, den Anforderungen nicht genügt.

Beim Zusammenbau wird der Kraftmessring 5 vorzugsweise mittels einer Zentrierhilfe, welche aussen am Kraftmessring 5 angreift, demnach mit einer Aussenzentrierung, um die Hohldehnschraube 12 des Bolzens 3 zentriert und anschliessend durch Anziehen der Mutter 4 an den Gewinden 9, 13 zwischen dem Bolzen 3 und der Mutter 4 unter Vorspannung fixiert. Somit entfällt die Notwendigkeit, eine Zentrierhülse zwischen der Hohldehnschraube 12 und dem Kraftmessring 5 einzubauen.

Insbesondere hat es sich als vorteilhaft erwiesen, zwischen dem Kraftmessring 5 und dem Kopfteil 11 des Bolzens 3 eine Gleitscheibe 21 anzuordnen, welche durch die Vorspannung fixiert ist. Diese Gleitscheibe 21 ermöglicht ein Gleiten zwischen den beiden Oberflächen des Kopfteils 11 und des Kraftmessrings 5 während dem gegenseitigen Verspannen mit der Mutter 4 zur Aufbringung der Vorspannung und verhindert somit einen Momentenverzug im Material des piezoelektrischen Kraftmessrings 5.

Erfindungsgemäss kann radial zwischen der Hohldehnschraube 12 und dem Kraftmessring ein Ringspalt 26 angeordnet sein (siehe Fig. 3), ohne dass dabei eine Zentrierhülse zwischen der Hohldehnschraube und dem Kraftmessring angeordnet ist. Der Ringspalt 26 kann somit den gesamten Raum zwischen der Hohldehnschraube 12 und dem Kraftmessring 5 einnehmen. Die beschriebene Aussenzentrierung kann über die Aussenmantelflächen vom Kraftmessring 5 und Kopfteil 11 erreicht werden.

Dadurch wird die Vorrichtung erneut vereinfacht und günstiger in der Herstellung.

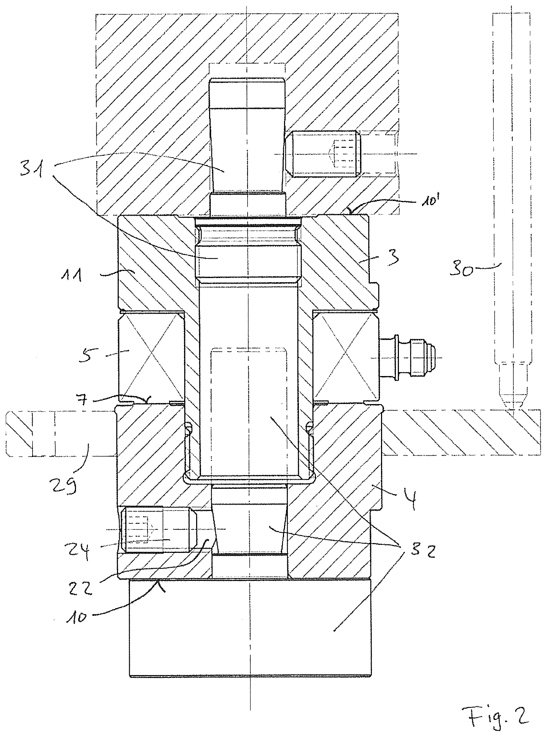

Da der Durchmesser D2 der zweiten Bohrung 14 der Mutter 4 resp. des Kopfteils 11 kleiner ist als der Innendurchmesser D_{I} der Hohldehnschraube, ist gewährleistet, dass ein Aufnahmebolzen 32 in der zweiten Bohrung 14 aufgenommen werden kann, der viel länger ist als die zweite Bohrung, wie in Fig. 2 ersichtlich. Erfindungsgemäss weist die Mutter 4 resp. das Kopfteil 11 im mittleren Bereich der zweiten Bohrung 14 eine radiale Bohrung 22 von aussen bis zur Innenwand 15 mit einem Innengewinde 23 auf, in der eine Madenschraube 24 eingesetzt ist. Durch Anziehen der Madenschraube kann ein Aufnahmebolzen 32 fixiert werden, wie in Fig. 2 ersichtlich.

Aus Fig. 2 und 3 ist zudem ersichtlich, dass die Zentrieraufnahme 15 in der zweiten Bohrung 14 mindestens in beiden Endbereichen der Innenwand 15 ausgestaltet sein muss. Der mittlere Bereich der zweiten Bohrung 14 wird in der Regel nicht für die Zentrierung benötigt, da dort bevorzugt die Madenschraube 24 angreift und ein Aufnahmebolzen 32 in diesem Bereich eine konische Aussenfläche aufweist, um zusammen mit der Madenschraube 24 einen Rückhalt eines eingesetzten Aufnahmebolzens 32 zu gewährleisten. Die Zentrieraufnahme 15 im Bereich der beiden Endbereiche 15a und 15b gewähren aber insbesondere eine Kippsicherung und sorgen somit für eine gute Zentrierung. Wichtig ist, dass die Länge L der zweiten Bohrung 14 und insbesondere der Zentrieraufnahme 15 umfassend beide Bereiche 15a, 15b und deren Abstand zueinander lang ist, insbesondere mindestens so lang wie der Aussendurchmesser D_{A} sowie vorzugsweise mindestens 20% der axialen Gesamthöhe des Kraftsensors 1 ausmacht.

Insbesondere kann die Mutter 4 nahe der inneren Stirnfläche 7 eine Auskragung 27 aufweisen. Diese Auskragung 27 dient als Begrenzung für die beschriebene Aussenzentrierung sowie gemäss Fig. 2 als Arretierung eines an der Mutter 4 anbringbaren breiten Ringes 29, an dem entsprechende Mittel 30 zur Bestimmung des axialen Weges angeordnet sind. Somit ist eine Kraft-Wegmessung möglich.

Insbesondere ist die zentrale Bohrung im Kraftsensor 1 durchgehend. Eine solche Anordnung ermöglicht eine Überbrückung des Kraftsensors 1, ohne dass dieser dazu ausgebaut werden muss. Insbesondere wenn Mittel zur Wegmessung vorhanden sind, können diese Messungen weiter geführt werden, ohne dass ein Kraftnebenschluss durch den Kraftmessring 5 stattfindet.

In der Bohrung nahe der oberen ringförmigen Auflagefläche 10' des Kraftsensors 1, je nach Ausführungsvariante im Kopfteil 11 des Bolzens 3 oder in der Mutter 4, kann ein Innengewinde 25 angebracht sein. Dieses erlaubt ein Anbringen eines Einspannzapfens 31 nahe der oberen Auflagefläche 10' für die einfache Adaptierung resp. Befestigung des Kraftsensors 1 an eine Presse 2, wie in Fig. 4 dargestellt. Die Bohrung kann insbesondere die Bohrung 28 der Hohldehnschraube 12 sein oder eine weitere Bohrung 8' in der Mutter 4, welche diese durchstösst.

Da bei einem Einsatz stets auch Zugkräfte auftreten, muss der erfindungsgemässe Kraftsensor 1 resp. der Kraftmessring 5 auch auf Zug belastbar sein. Erfindungsgemässe Kraftsensoren sind bis 60 kN auf Druckkräfte belastbar und/oder bis 10 kN auf Zugkräfte. Dies bedingt, dass die beschriebene Vorspannung zwischen Bolzen 3 und Mutter 4 entsprechend hoch ist. Andererseits muss die Anbringung des Kraftsensors 1 an den Einspannzapfen 31 sowie an den Aufnahmebolzen 32 entsprechend stark sein.

In den Figuren ist der Kraftmessring 5 mit einer Membrane 17 ausgestaltet, die in Richtung Mutter 4 ausgerichtet ist. Es ist aber auch möglich, den Kraftmessring 5 um 180° zu drehen, sodass er mit seiner Membrane 17 gegen den Bolzen 3 resp. gegen die Gleitscheibe 21 ausgerichtet ist.

Alle bevorzugten Ausführungsformen, die im Zusammenhang mit einer Ausführung nach den Figuren 1-3 beschrieben sind, lassen sich ebenso mit einem erfindungsgemässen Kraftsensor 1 gemäss Figur 3 durchführen. Die Referenzzeichen tragen jeweils dieselbe Bedeutung zur Erklärung der Erfindung.

### Bezugszeichenliste

- 1: Kraftsensor
- 2: Presse
- 3: Bolzen
- 4: Mutter
- 5: Kraftmessring
- 6: Steckeranschluss
- 7: Innere Stirnfläche
- 8: Erste Bohrung (der Mutter)
- 8': weitere Bohrung (in der Mutter)
- 9: Innengewinde der Mutter
- 10: 10' Auflagefläche
- 11: Kopfteil
- 12: Hohldehnschraube
- 13: Aussengewinde
- 14: Zweite Bohrung
- 15: Innenwand, Zentrieraufnahme 15a, 15b Bereiche der Innenwand, Zentrierbereiche
- 16: Gehäuse
- 17: Membran
- 18: Piezoelektrische Messelemente
- 19: Innenfläche, Zentrieraufnahme
- 20: Führungsbereich
- 21: Gleitscheibe
- 22: radiale Bohrung
- 23: Innengewinde für Madenschraube
- 24: Madenschraube
- 25: Innengewinde Bolzen
- 26: Ringspalt
- 27: Auskragung
- 28: Bohrung (in der Hohldehnschraube)
- 29: Ring
- 30: Mittel
- 31: Einspannzapfen
- 32: Aufnahmebolzen

- A: Achse
- F: Kraft
- D1: Durchmesser (innen)
- D_{A}: Aussendurchmesser
- D2: kleinerer Durchmesser (innen)
- L: Länge
- D_{I}: Innendurchmesser der Hohldehnschraube

## Patentansprüche

1. Kraftsensor mit einer zentralen Achse (A), einer unteren und einer oberen ringförmigen Auflagefläche (10, 10') und einem Aussendurchmesser D_{A} zum Messen von axial auftretenden Kräften (F) in handbetriebenen oder pneumatischen Pressen (2), umfassend einen zwischen einem Bolzen (3) und einer Mutter (4) vorgespannten, piezoelektrischen Kraftmessring (5) mit einem Steckeranschluss (6), wobei die Mutter (4) eine innere Stirnfläche (7) mit einer ersten Bohrung (8) mit einem ersten Durchmesser (D1) mit einem Innengewinde (9) und die untere ringförmige Auflagefläche (10) aufweist, und wobei der Bolzen (3) eine durchgehende Bohrung (28) aufweist sowie ein Kopfteil (11) mit der oberen ringförmigen Auflagefläche (10'), sowie eine Hohldehnschraube (12) mit einem Innendurchmesser (D_{I}) und mit einem frontseitigen Aussengewinde (13), welche den Kraftmessring (5) durchsetzt und in das Innengewinde (9) der Mutter (4) eingreift, wobei die Mutter (4) eine zweite Bohrung (14) mit einem zweiten, kleineren Durchmesser (D2) als der Innendurchmesser (D_{I}) der Hohldehnschraube (12) aufweist, welche die Mutter (4) zur unteren Auflagefläche (10) hin durchsetzt, wobei die Innenwand (15) der zweiten Bohrung (14) als Zentrieraufnahme für eine Gleitpassung ausgestaltet ist, **dadurch gekennzeichnet, dass** der Durchmesser (D2) der zweiten Bohrung (14) mindestens einen Viertel des genannten Aussendurchmessers (D_{A}) ausmacht und die Länge (L) der zweiten Bohrung (14) mindestens so lang ist wie ihr Durchmesser (D2) und wobei die Mutter (4) im mittleren Bereich der zweiten Bohrung (14) eine radiale Bohrung (22) von aussen bis zur Innenwand (15) mit einem Innengewinde (23) aufweist, in der eine Madenschraube (24) eingesetzt ist.

2. Kraftsensor nach Anspruch 1, **dadurch gekennzeichnet, dass** im Kopfteil (11) in der Bohrung (28) zur oberen Auflagefläche (10') hin ein Innengewinde (25) angebracht ist.

3. Kraftsensor mit einer zentralen Achse (A), einer unteren und einer oberen ringförmigen Auflagefläche (10, 10') und einem Aussendurchmesser D_{A} zum Messen von axial auftretenden Kräften (F) in handbetriebenen oder pneumatischen Pressen (2), umfassend einen zwischen einem Bolzen (3) und einer Mutter (4) vorgespannten, piezoelektrischen Kraftmessring (5) mit einem Steckeranschluss (6), wobei die Mutter (4) eine innere Stirnfläche (7) mit einer ersten Bohrung (8) mit einem ersten Durchmesser (D1) mit einem Innengewinde (9) und die obere ringförmige Auflagefläche (10') aufweist, und wobei der Bolzen (3) eine durchgehende Bohrung (28) aufweist sowie ein Kopfteil (11) mit der unteren ringförmigen Auflagefläche (10), sowie eine Hohldehnschraube (12) mit einem Innendurchmesser (D_{I}) und mit einem frontseitigen Aussengewinde (13), welche den Kraftmessring (5) durchsetzt und in das Innengewinde (9) der Mutter (4) eingreift, wobei das Kopfteil (11) eine zweite Bohrung (14) mit einem zweiten, kleineren Durchmesser (D2) als der Innendurchmesser (D_{I}) der Hohldehnschraube (12) aufweist, welche den Bolzen (3) zur unteren Auflagefläche (10) hin durchsetzt, wobei die Innenwand (15) der zweiten Bohrung (14) als Zentrieraufnahme für eine Gleitpassung ausgestaltet ist,
**dadurch gekennzeichnet, dass** der Durchmesser (D2) der zweiten Bohrung (14) mindestens einen Viertel des genannten Aussendurchmessers (D_{A}) ausmacht und die Länge (L) der zweiten Bohrung (14) mindestens so lang ist wie ihr Durchmesser (D2) und wobei das Kopfteil (11) im mittleren Bereich der zweiten Bohrung (14) eine radiale Bohrung (22) von aussen bis zur Innenwand (15) mit einem Innengewinde (23) aufweist, in der eine Madenschraube (24) eingesetzt ist.

4. Kraftsensor nach Anspruch 3, **dadurch gekennzeichnet, dass** die Mutter (4) eine durchgehende Bohrung (8') aufweist, in welcher zur oberen Auflagefläche (10') hin ein Innengewinde (25) angebracht ist.

5. Kraftsensor nach einem der vorhergehenden Ansprüche, **dadurch gekennzeichnet, dass** die Mutter (4) in der ersten Bohrung (8) nahe der Stirnfläche (7) ebenfalls eine Innenfläche (19) aufweist, die als Zentrieraufnahme (19) für eine Gleitpassung ausgestaltet ist, und dass der Bolzen (3) anschliessend an das Aussengewinde (13) dem Kopfteil (11) zugewandt einen Führungsbereich (20) aufweist, der mindestens so breit ist wie das Aussengewinde (13) und nahe der inneren Stirnfläche in die Zentrieraufnahme (19) der ersten Bohrung (8) zentriert aufgenommen ist.

6. Kraftsensor nach Anspruch 1 oder 2, **dadurch gekennzeichnet, dass** zwischen dem Kraftmessring (5) und dem Kopfteil (11) des Bolzens (3) eine Gleitscheibe (21) angeordnet und durch die Vorspannung fixiert ist.

7. Kraftsensor nach einem der vorhergehenden Ansprüche, **dadurch gekennzeichnet, dass** radial zwischen der Hohldehnschraube (12) und dem Kraftmessring (5) ein Ringspalt (26) vorhanden ist.

8. Kraftsensor nach einem der vorhergehenden Ansprüche, **dadurch gekennzeichnet, dass** die Mutter (4) nahe der inneren Stirnfläche (7) eine Auskragung (27) aufweist.

9. Kraftsensor nach einem der vorhergehenden Ansprüche, **dadurch gekennzeichnet, dass** er bis 60 kN auf Druckkräfte belastbar ist.

10. Kraftsensor nach einem der vorhergehenden Ansprüche, **dadurch gekennzeichnet, dass** er bis 10 kN auf Zugkräfte belastbar ist.

## Claims

1. A force sensor comprising a central axis (A), lower and upper annular support surfaces (10, 10') and an outer diameter D_{A} for measuring axially occurring forces (F) in manually operated or pneumatic presses (2) wherein said force sensor comprises a piezoelectric force washer (5) prestressed between a stud (3) and a nut (4) and comprising a plug connection (6), wherein said nut (4) comprises an inner end face (7) having a first hole (8) of a first diameter (D1) with an internal thread (9) and the lower annular support surface (10), and wherein the stud (3) comprises a through-hole (28) and a head part (11) including the upper annular support surface (10'), as well as a hollow expansion screw (12) having an inner diameter (D_{I}) and an external thread (13) on its end face, said hollow expansion screw passing through the force washer (5) and engaging the internal thread (9) of the nut (4), the nut (4) comprising a second hole (14) of a second diameter (D2) that is smaller than the inner diameter (D_{I}) of the hollow expansion screw (12) that extends through the nut (4) towards the lower support surface (10), wherein the inner wall (15) of the second hole (14) is formed as a centering support to enable a sliding fit, **characterized in that** the diameter (D2) of the second hole (14) represents at least one quarter of said outer diameter (D_{A}) and the length (L) of the second hole (14) is at least as long as its diameter (D2), and wherein in the central portion of the second hole (14) said nut (4) comprises a radial hole (22) from the outside up to the inner wall (15) having an internal thread (23) into which a grub screw (24) is inserted.

2. The force sensor according to claim 1, **characterized in that** an internal thread (25) is formed in the head part (11) within the hole (28) towards the upper support surface (10').

3. A force sensor comprising a central axis (A), lower and upper annular support surfaces (10, 10'), and an outer diameter D_{A} for measuring axially occurring forces (F) in manually operated or pneumatic presses (2) wherein said force sensor comprises a piezoelectric force washer (5) prestressed between a stud (3) and a nut (4) and comprising a plug connection (6), wherein said nut (4) comprises an inner end face (7) having a first hole (8) of a first diameter (D1) having an internal thread (9) and the upper annular support surface (10'), and wherein the stud (3) comprises a through-hole (28) and a head part (11) including the lower annular support surface (10), as well as a hollow expansion screw (12) having an inner diameter (D_{I}) and an external thread (13) on its end face, said hollow expansion screw passing through the force washer (5) and engaging the internal thread (9) of the nut (4), said head part (11) comprising a second hole (14) of a second diameter (D2) that is smaller than the inner diameter (D_{I}) of the hollow expansion screw (12) extending through the stud (3) towards the lower support surface (10), wherein the inner wall (15) of the second hole (14) is formed as a centering support enabling a sliding fit, **characterized in that** the diameter (D2) of the second hole (14) represents at least one quarter of said outer diameter (D_{A}) and the length (L) of the second hole (14) is at least as long as its diameter (D2), and wherein in the central portion of the second hole (14) said head part (4) comprises a radial hole (22) from the outside up to the inner wall (15) having an internal thread (23) into which a grub screw (24) is inserted.

4. The force sensor according to claim 3, **characterized in that** the nut (4) has a through-hole (8') in which an internal thread (25) towards the upper support surface (10') is formed.

5. The force sensor according to any of the preceding claims, **characterized in that** in the first hole (8) near the end face (7) said nut (4) also comprises an inner surface (19) formed as a centering support (19) enabling a sliding fit, and **in that** the stud (3) comprises a guide portion (20) behind the external thread (13) and facing the head part (11) which is at least as wide as the external thread (13) and is accommodated in a centered manner near the inner end face in the centering support (19) of the first hole (8).

6. The force sensor according to claim 1 or 2, **characterized in that** a sliding disc (21) is positioned between the force washer (5) and the head part (11) of the stud (3) and held in place by said prestressing.

7. The force sensor according to any of the preceding claims, **characterized in that** an annular gap (26) is present in a radial direction between the hollow expansion screw (12) and the force washer (5) .

8. The force sensor according to any of the preceding claims, **characterized in** said nut (4) having a protrusion (27) near the inner end face (7).

9. The force sensor according to any of the preceding claims, **characterized in that** it can be subjected to compression forces of up to 60 kN.

10. The force sensor according to any of the preceding claims, **characterized in that** it can be subjected to tensile forces of up to 10 kN.

## Revendications

1. Un capteur de force présentant un axe central (A), des surfaces d'appui inférieure et supérieure annulaires (10, 10') et un diamètre extérieur D_{A} et servant à mesurer les forces (F) agissant axialement dans des presses (2) manuelles ou pneumatiques, ledit capteur de force comprenant un anneau dynamométrique (5) piézoélectrique précontraint entre un boulon (3) et un écrou (4) et muni d'une fiche d'alimentation (6), l'écrou (4) présentant une face interne (7) munie d'un premier alésage (8) d'un premier diamètre (D1), comportant un filetage intérieur (9) ainsi que la surface d'appui inférieure annulaire (10), et ledit boulon (3) présentant un alésage traversant (28) et une partie tête (11) comportant la surface d'appui supérieure annulaire (10'), ainsi qu'une vis d'expansion creuse (12) ayant un diamètre intérieur (D_{I}) et présentant côté frontal un filetage extérieur (13) qui traverse l'anneau dynamométrique (5) et s'engage dans le filetage intérieur (9) de l'écrou (4), dans lequel l'écrou (4) présente un second alésage (14) d'un second diamètre (D2) inférieur au diamètre intérieur (D_{I}) de la vis d'expansion creuse (12) traversant l'écrou (4) vers la surface d'appui inférieure annulaire (10), la paroi interne (15) du second alésage (14) étant conçu pour former un logement de centrage permettant un ajustement glissant, **caractérisé en ce que** le diamètre (D2) du second alésage (14) est au moins égal à un quart dudit diamètre extérieur (D_{A}) et la longueur (L) du second alésage (14) est au moins aussi grande que son diamètre (D2), et dans lequel l'écrou (4), dans la partie centrale du second alésage (14), comporte un perçage radial (22) de l'extérieur jusqu'à la paroi interne (15) avec un filetage intérieur (23) dans laquelle est insérée une vis sans tête (24).

2. Le capteur de force selon la revendication 1, **caractérisé en ce qu'**un filetage intérieur (25) est formé dans la partie tête (11) dans l'alésage (28) vers la surface d'appui supérieure (10').

3. Un capteur de force présentant un axe central (A), des surfaces d'appui inférieure et supérieure annulaires (10, 10') et un diamètre extérieur D_{A} et servant à mesurer les forces (F) agissant axialement dans des presses (2) manuelles ou pneumatiques, ledit capteur de force comprenant un anneau dynamométrique (5) piézoélectrique précontraint entre un boulon (3) et un écrou (4) et muni d'une fiche d'alimentation (6), l'écrou (4) présentant une face interne (7) munie d'un premier alésage (8) d'un premier diamètre (D1), comportant un filetage intérieur (9) ainsi que la surface d'appui supérieure annulaire (10'), et ledit boulon (3) présentant un alésage traversant (28) et une partie tête (11) comportant la surface d'appui inférieure annulaire (10), ainsi qu'une vis d'expansion creuse (12) ayant un diamètre intérieur (D_{I}) et présentant côté frontal un filetage extérieur (13) qui traverse l'anneau dynamométrique (5) et s'engage dans le filetage intérieur (9) de l'écrou (4), dans lequel la partie tête (11) présente un second alésage (14) d'un second diamètre (D2) inférieur au diamètre intérieur (D_{I}) de la vis d'expansion creuse (12) traversant le boulon (3) vers la surface d'appui inférieure annulaire (10), la paroi interne (15) du second alésage (14) étant conçu pour former un logement de centrage permettant un ajustement glissant, **caractérisé en ce que** le diamètre (D2) du second alésage (14) est au moins égal à un quart dudit diamètre extérieur (D_{A}) et la longueur (L) du second alésage (14) est au moins aussi grande que son diamètre (D2), et dans lequel la partie tête (11), dans la partie centrale du second alésage (14), comporte un perçage radial (22) de l'extérieur jusqu'à la paroi interne (15) avec un filetage intérieur (23) dans laquelle est insérée une vis sans tête (24).

4. Le capteur de force selon la revendication 3, **caractérisé en ce que** l'écrou (4) comprend un alésage traversant (8') dans lequel un filetage intérieur (25) est formé vers la surface d'appui supérieure (10').

5. Le capteur de force selon l'une quelconque des revendications précédentes, **caractérisé en ce que** l'écrou (4) dans le premier alésage (8) près de la face (7) comprend également une surface interne (19) formant un logement de centrage (19) pour permettre un ajustement glissant, et **en ce que** le boulon (3) comprend une partie de guidage (20) se situant après le filetage extérieur (13) et faisant face à la partie tête (11) qui est au moins aussi large que le filetage extérieur (13) et reçue de manière à être centré près de la face interne dans le logement de centrage (19) du premier alésage (8).

6. Le capteur de force selon la revendication 1 ou 2, **caractérisé en ce qu'**un disque glissant (21) est placé entre l'anneau dynamométrique (5) et la partie tête (11) du boulon (3) et tenu en place par la précontrainte.

7. Le capteur de force selon l'une quelconque des revendications précédentes, **caractérisé en ce qu'**une fente annulaire (26) est présente radialement entre la vis d'expansion creuse (12) et l'anneau dynamométrique (5).

8. Le capteur de force selon l'une quelconque des revendications précédentes, **caractérisé en ce que** l'écrou (4) comprend une protubérance (27) près de la face interne (7).

9. Le capteur de force selon l'une quelconque des revendications précédentes, **caractérisé en ce qu'**il peut subir des forces de compression allant jusqu'à 60 kN.

10. Le capteur de force selon l'une quelconque des revendications précédentes, **caractérisé en ce qu'**il peut subir des forces de traction allant jusqu'à 10 kN.
